# EUROPEAN PATENT SPECIFICATION

(11) **EP 0 863 423 B1**
(45) Date of publication and mention of the grant of the patent: **01.10.2003**
(21) Application number: 98109113.5
(22) Date of filing: 16.07.1993
(51) Int. Cl.: G02C 1/02

(54) **Spectacles**
Brille
Lunettes

(30) Priority: 17.07.1992 JP 21379892
(43) Date of publication of application: 09.09.1998
(62) Divisional of application: 93916178.2
(73) Proprietor: MURAI INC., Sakai-gun, Fukui-ken (JP)
(72) Inventor: Murai, Masaru, Fukui 910 (JP); Hyoi, Isao, Sakai-Gun, Fukui 910-02 (JP)
(74) Representative: Klunker . Schmitt-Nilson . Hirsch

(56) References cited:
- WO-A-87/04806
- DE-A- 3 239 699
- DE-A- 3 612 989
- GB-A- 191 202 645
- US-A- 943 085
- US-A- 1 931 177
- US-A- 2 041 440
- US-A- 2 680 847

## Description

### Technical Field of the Invention

The present invention relates to spectacles in which spectacle parts are directly attached to lenses without utilizing any fastening means such as screws.

### Background Art

One example of such conventional spectacles are disclosed for example in the Japanese Utility Model Laid-open Publication No. HEI 4-61311. That is, in known spectacles of this kind, fitting portions or parts having elastic and springy property are formed to end portions of a bridge, an end plate, a pad and the like constituting a spectacle part, and such elastic fitting parts are fitted into holes formed to the lenses and fixed thereto.

In this known art, however, the elastic fitting parts are fitted and fixed to the holes of the lenses by applying pressure, so that the formation of relatively large holes to the lenses are required, thus providing a problem on design.

Furthermore, if the hole is not formed exactly, in the case of small fitting force, there is a fear of disengaging the spectacle parts from the lenses and, on the contrary, in the case of large fitting force, there is a fear of damaging or breaking the lenses. The requirement of the exact working performance will result in worse productivity.

An object of the present invention is to solve such problems as those encountered in the prior art and to provide a spectacle having spectacle parts directly attached to the lenses capable of reducing limitations on the spectacle design and producing the spectacle with relatively low working performance.

### Disclosure of The Invention

The above object is achieved by spectacles according to the present invention as defined in the appended claims 1 and 2.

According to the present invention, there are provided spectacles having lenses which are supported by a spectacle part other than a rim, which is characterized in that the lenses are directly supported by a clamp means clamping the lenses.

Here, the term "clamp" including snapping and supporting functions, in both cases, one in which a force is applied in the clamp means closing direction to thereby snap the lens and other in which a force is applied to the clamp means opening direction and acting a reaction force of the lens to snap the clamp means.

According to the present invention, the lens is clamped only by the clamp means, so that a precise hole forming working, as in the conventional technique, is not required.

It is preferred that the clamp means is provided with an elastic means for pressing the lens contacting portion of the clamp means against the lens by utilizing the springy elastic property.

However, it may be possible to utilize the bonding, fusing or calking means for the lens contacting portion of the clamp means without applying the elastic force.

It is also preferred to effect a work to the lens contacting portion of the clamp means for increasing friction resistance.

The working for increasing the friction resistance may be made by making coarse at least one of the contacting surfaces of the clamp means and the lens, forming an irregular surface or applying other frictioning material between the contacting surfaces.

Furthermore, a buffer means for buffering the force transferred from the spectacle part to the lens may be provided between the clamp means and the spectacle part. According to this location, an excessive force is prevented from being applied to the lens and the damage or breaking of the clamp means and the lens can be prevented.

A lens portion clamped by the clamp means is formed to a portion between the lens edge portions or between clamping force receiving portions formed to the lens.

The clamp means may have a structure for clamping the lens from its front and rear surface sides. .

It is desired to form the clamping force receiving means as a recess such as hole formed to the lens. It may be possible to form the clamping force receiving means as a protrusion formed to the lens.

The clamp means is provided with a plurality of clamp pieces. It is preferred that at least one of the clamp pieces is endowed with a springy elastic property.

Such a structure may be adapted as that in which the lens is clamped by a clamp piece engaged with the clamping force receiving means formed to the lens and a clamp piece engaged with the edge portion of the lens.

It is effective to form a groove to the edge of the lens with which the clamp piece is engaged.

It may be possible to be provided with a plurality of clamp pieces to be engaged with a plurality of clamping force receiving portions formed to the lens to thereby clamp a lens portion between the clamping force receiving portions.

It is preferred that the clamping force receiving portion formed to the lens is a hole into which the clamp piece is inserted and fitted.

It is also preferred that there is provided a positioning means for positioning the clamp piece.

The clamp means comprises a pair of clamp pieces connected at one ends thereof so as to provide substantially U-shape, and the clamp means may be fitted to the lens from the rear side of the lens with the opened end side of the clamp pieces directed forward or from the front side of the lens with the opened end side thereof directed rearward.

As the spectacle part, an end member, a temple, a bridge, a pad leg or a hinge means may be utilized.

### Brief Description of The Drawings

Fig. 1 is a perspective view of spectacles according to one embodiment of the present invention, in which Fig. 1A is a general perspective view of spectacles, Fig. 1B is a plan view of a main portion of the spectacles, Fig. 1C is a front view of the main portion of the spectacles and Fig. 1D shows another example of an elastic clamp member according to the present invention.
Fig. 2 is a developed view of the main portion of the spectacles.
Figs. 3 to 11 are views representing modified embodiments of the elastic clamp member of Fig. 1.
Figs. 12 and 13 represent further modified embodiments of the elastic clamp member to which hinge means is applied.
Figs. 14 and 15 represent further modified embodiments of the elastic clamp member of Fig. 1.
Figs. 16 to 18 represent further modified embodiments of the elastic clamp members having structures in conformity with the types of the end members.
Figs. 19 and 20 are views for showing clamping force directions different in various structures of the elastic clamp members.
Fig. 21 shows various alternations of the shapes of the holes each formed to the lens into which the elastic clamp member is inserted.

### Best Modes for Embodying The Invention

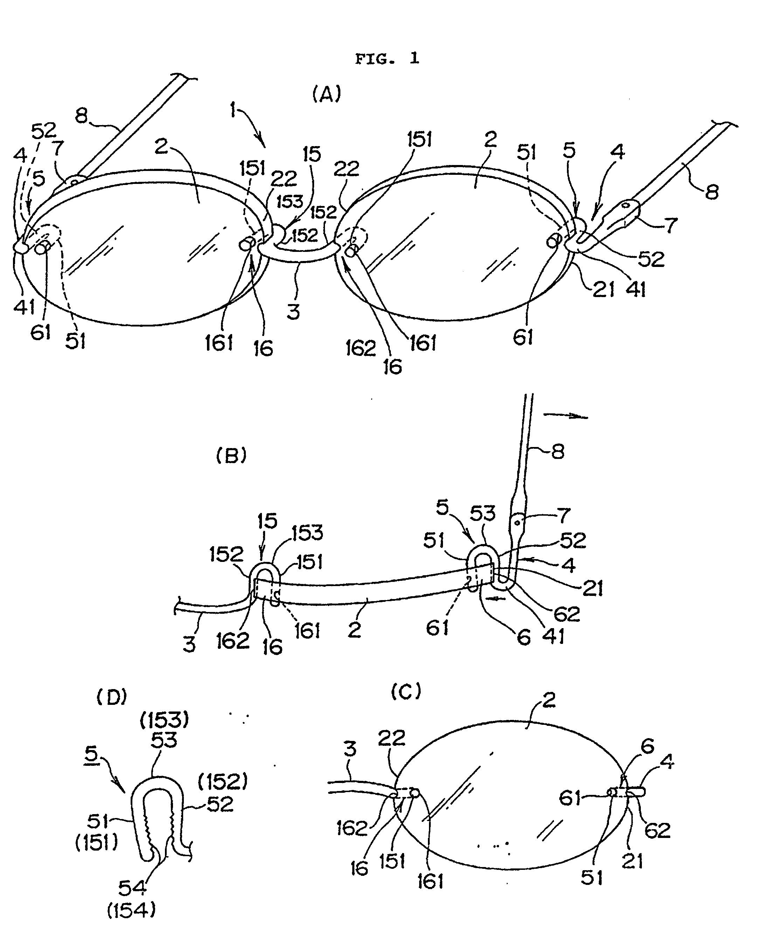

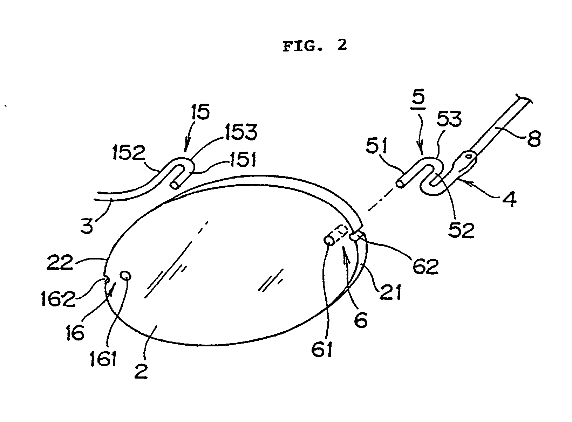

One preferred embodiment of spectacles according to the present invention will be first described with reference to Figs. 1 and 2, in which a spectacle is denoted by reference numeral 1 which includes two lenses 2 to which a bridge 3 and end members 4 are directly attached as spectacle parts without using any fastening means such as screws, and lenses 2 are supported without using a rim.

The end members 4 are attached to both sides of the lenses and have rear ends attached to temples 8 through hinge members 7. A first clamp member 5 having an elastic property is provided to the distal front end of the end member 4, the first clamp member 5 being bent so as to provide substantially U-shape. This first elastic clamp member 5 is fixed to the lens 2 by clamping a first fixing portion 6 of the lens 2 formed to an outer edge side of the lens 2.

The first fixing portion 6 is formed with a lens portion between a hole 61 formed to the lens surface as a lens holding means and an outer edge 21 of the lens 2. The first elastic clamp member 5 is composed of a first clamp piece 51 which is to be fitted into the hole 61 and a second clamp piece 52 engaging with the outer edge 21 of the lens 2. These first and second clamp pieces 51 and 52 are integrally connected with each other through a connecting piece 53, and in the illustrated embodiment, the connecting piece 53 is positioned to the rear side of the lens 2. It is not necessary to form the hole 61 as a through hole, and it may be formed as a recessed portion or, in a certain case, it may be formed as a protruded portion.

Accordingly, only the end of first clamp piece 51, fitted into the hole 61, of the first elastic clamp member 5 is exposed to the front side of the lens 2. The end member 4 is connected to the second clamp piece 52 through a connecting portion 41 which is further bent so as to provide a U-shape, and accordingly, the structure including the end member 4 and the first elastic clamp member 5 provides entirely substantially S-shape. This connecting portion 41 attains function for alleviating a force from transferring from the temple side to the first clamp member 5, thus preventing the lenses 2 from applying an excessive stress or force.

A groove 62 is formed to the outer edge 21 of the lens 2 with which the second clamp piece 52 of the first clamp member 5 is engaged.

The bridge 3 is provided with second elastic clamp members 15, at its both end portions, which are to be fixed to second fixing portions 16 formed to inner edge sides of the lenses 2.

An hole 161 is formed to the lens 2 at the inner edge side of the lens 2 and the second fixing portion 16 is formed with a lens portion between the hole 161 and an inner edge 22 of the lens 2. The second elastic clamp member 15 is composed of a first clamp piece 151 which is to be fitted into the hole 161 and a second clamp piece 152 engaging with the inner edge 22 of the lens 2. These first and second clamp pieces 151 and 152 constitute opposing portions of the U-shaped second clamp member 5 and connected with each other through a connecting piece 153. The connecting piece 153 is positioned to the rear side of the lens 2, and accordingly, only the end of first clamp piece 151, fitted into the hole 161, of the second elastic clamp member 15 is exposed to the front side of the lens 2.

A groove 162 is formed to the inner edge 22 of the lens 2 with which the second clamp piece 152 of the second clamp member 15 is engaged. It is therefore necessary for the groove 162 to be formed to a portion corresponding to the second clamp piece 152 and to have a size therefor.

In assembling the spectacle of this embodiment, first with reference to the first elastic clamp member 5, the first clamp piece 51 of the first elastic clamp member 5 provided at the front end of the end member 4 is inserted into the hole 61 of the lens 2 and the second clamp piece of the clamp member 5 is then engaged with the groove 62 formed to the outer edge of the lens 2 to thereby clamp the first fixing portion 6 of the lens 2 by the first and second clamp pieces of the first elastic clamp member 5. The clamping force is due to the springy property of the first elastic clamp member 5. This assembling working is of course done to both the lenses 2 in the same manner.

_ Next, regarding the bridge 3, first clamp pieces 151 of the second clamp members 15 provided at both the end portions of the bridge 3 are inserted into the holes 161 formed to the inner edge sides of the lenses 2 and the second clamp pieces 152 are then engaged with the grooves 162 formed to the inner edges of the lenses 2. According to these manners, the spectacle is assembled.

As shown in Fig. 1D, the first and second clamp pieces 51 and 151 of the first and second elastic clamp members 5 and 15 are formed with burrs 54 and 154 for increasing frictions at the contacting surfaces of the clamp pieces 5 and 15 to the walls of the holes 61 and 161 of the lenses 2, thus the clamp members being firmly fitted in the holes of the spectacle lenses. This modification may be also applicable to the bridge 3. In order to increase the friction force, it may be possible to independently interpose a friction member and also possible to adapt other structures.

Furthermore, a calking fixing technique may be adapted in place of the fixing by the spring, the bonding process may be applied to the contact surface, or the fusing process may be also adapted in accordance with a material to be used.

Furthermore, although not shown, the pad legs of the nose pad may be fixed to the bridge or supported by the lens by providing a clamp member like the bridge.

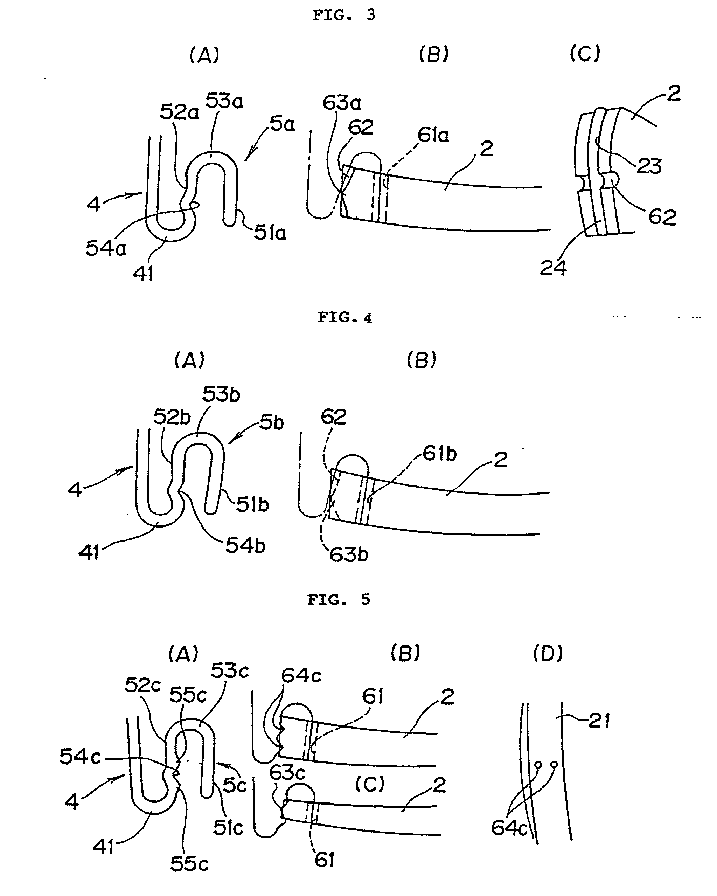

Figs. 3 to 11 show other modifications of the first elastic clamp member 5 for the end member 4.

In the following, only the matters different from the structure of Fig. 1 are described and like reference numeral with small alphabets are applied to elements or members corresponding to those of Fig. 1 and the explanations thereof are now omitted herein.

First, Fig. 3 shows a modified first elastic clamp member 5a, in which the second clamp piece 52a of the first elastic clamp member 5a is formed to be linearly straight and a recess 54a is formed to the outer edge 21 of the lens 2. The portion of the outer edge 21 corresponding to this recess 54a of the second clamp piece 52a is formed with a protrusion 63a which is to be engaged with the recess 54a for firmly positioning the clamp piece 52a. In the illustrated embodiment, the protrusion 64a is formed to a groove 62a of the lens 2 so as to provide a sharp edge portion. The first clamp piece 51a is parallel to the second clamp piece 52a with each other. As the positioning means, different from the above, the calking of the front end of the first clamp piece 51a may be adapted or a stopper may be applied.

Further, in place of the formation of the protrusion 63a, as shown in Fig. 3C, a flexible wire-like member 24 such as nylon wire is engaged with a groove formed entirely to the outer periphery of the lens 2. it is possible to mount a decoration member by utilizing the flexible wire-like member 24.

The modifications represented by Figs. 4 and 5 have substantially the same structure for the positioning of the first elastic clamp member.

Namely, in Fig. 4, the first elastic clamp member 5b has a first clamp piece 51b which extends linearly with slight inward inclination towards a second clamp piece 52b to narrow a distance at front ends between the first and second clamp pieces 51b and 52b for ensuring further firm engagement of the clamp member. A hole 61b formed to the lens 3 for the insertion of the first clamp piece 51b has a tapered wall having a like inclination.

In Fig. 5, a first elastic clamp member 5c has a second clamp piece 52c provided with protrusions 55c and 55c between which a recess 54c is formed. This embodiment is particularly suitable for a lens having a relatively large thickness (mainly in the case of concave lens) and in such case, two holes 64c and 64c will be formed to the outer edge of the lens 2 at portions suitable for the fitting of two protrusions 55c and 55c of the second clamp piece 52c, thus firmly clamping the lens.

On the other hand, in the case of the lens 2 having a relatively thin thickness (mainly in the case of convex lens), the lens 2 is fitted into the recess 54c of the second clamp piece 52c with front and rear edge portions of the lens being clamped by the protrusions 55c and 55c, thus increasing the clamping force.

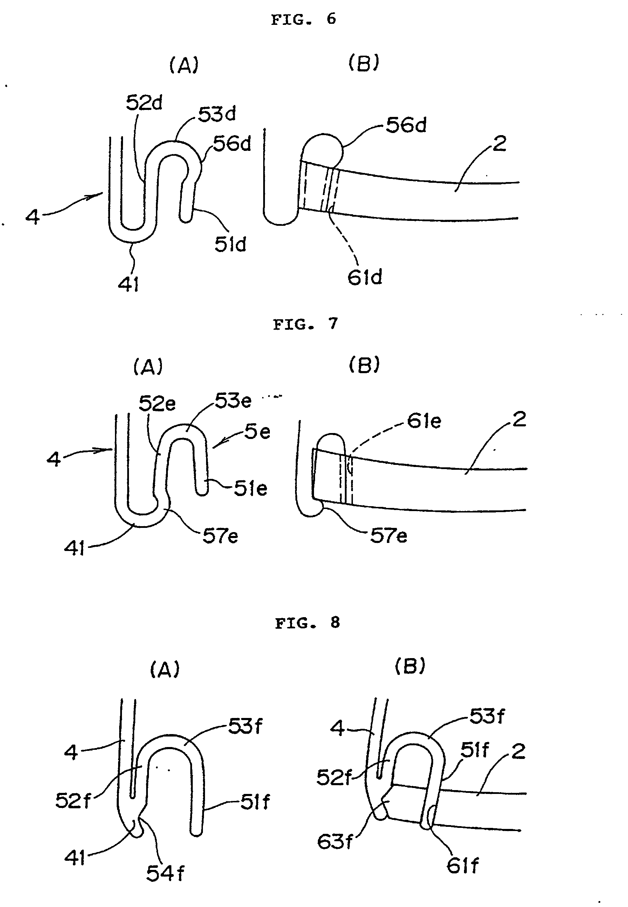

A first elastic clamp member 5d of Fig. 6 has a first clamp piece 51d provided at its root portion with a protrusion 56d for achieving firm engagement with the edge portion of the lens 2 and preventing the lens 2 from being moved inside the first elastic clamp member 5d. Furthermore, likely the embodiment of Fig. 4, the first clamp piece 51d has an inclination towards the second clamp piece 52d to reduce an opening distance therebetween to apply a force to the lens 2 rearward, thus firmly clamping the lens 2 between the protrusion 56d and the front end portion of the first clamp piece 51d.

In the embodiment of Fig. 7, reversely to that of Fig. 6, a protrusion 57d is formed to a root portion of a second clamp piece 52e contacting the outer edge 21 of the lens 2 on the side of the first clamp piece 51e so that the protrusion 57e is engaged with the lens 2.

A distance between the first and second clamp pieces 51e and 52e has inclination widening in a direction toward an opening end side, and accordingly, when the first elastic clamp member 5e is inserted into the hole 61 *of* the lens 2, a force pressing the lens 2 forward is applied and the lens 2 is thus engaged with the protrusion 57e, thereby achieving the firm clamping of the lens 2.

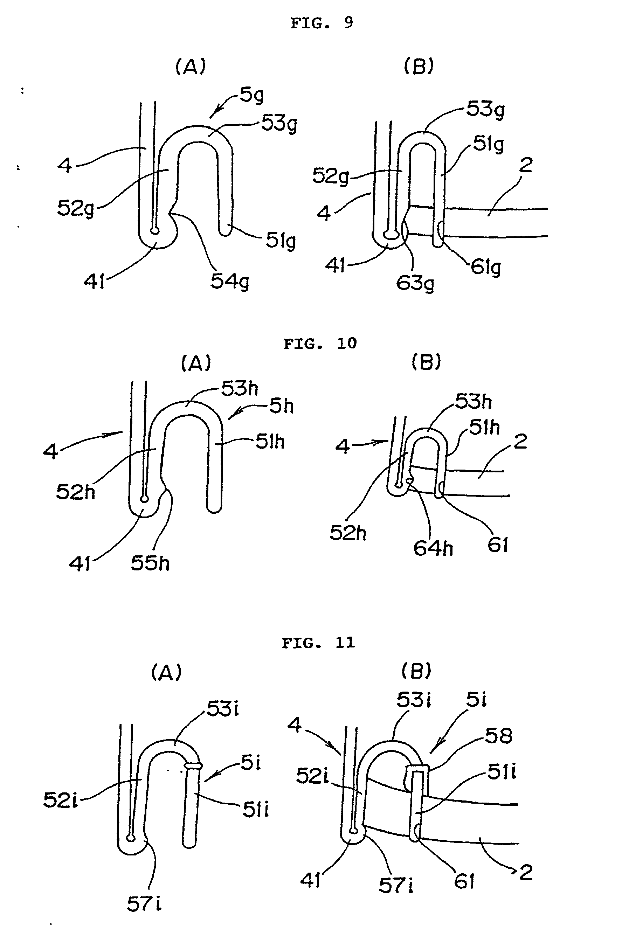

In the embodiments of Figs. 8 and 9, first elastic clamp members 5f and 5g respectively having second clamp pieces 52f and 52g, contacting the outer edge of the lens 21, which are provided with recesses 54f and 54g into which the lens 2 is fitted and fixed. The side surface of the lens 2 is formed with protrusion 63f or 63g which fits into the recess 54f or 54g. In these embodiments, the distance between the end member 4 and the first clamp piece 51f or 51g is made smaller than that between the first clamp piece 51f (51g) and the second clamp piece 52f (52g) to reduce the outward extension of the end member 4 with respect to the lens 2.

In the embodiment of Fig. 10, reversely to that of Fig. 9, a first elastic clamp member 5h is provided with a protrusion 55h to a second clamp piece 52h contacting the outer edge 21 of the lens 2 and a recess 64 into which this protrusion 55h is fitted is formed to the edge of the lens 2. In this embodiment, likely in the embodiments of Figs. 8 and 9, the distance between the end member 4 and the first clamp piece 51h is made smaller than that between the first clamp piece 51h and the second clamp piece 52h to reduce the outward extension of the end member 4 with respect to the lens 2.

The first elastic clamp member 5i of the embodiment of Fig. 11 is an alternation of the embodiment of Fig. 7, in which a fitting piece 58i such as rubber or silicon material is applied to a first clamp piece 51i which is to be inserted into the hole 61 of the lens 2 and other structure is substantially the same as that of Fig. 7 and the lens 2 is firmly fixed to the clamp member by forcing forward the lens 2 through the engagement between the lens 2 and the protrusion 57i of the second clamp piece 52i.

In this embodiment, the distance between the end member 4 and the first clamp piece 51i is made smaller than that between the first clamp piece 51i and the second clamp piece 52i to reduce the outward extension of the end member 4 with respect to the lens 2.

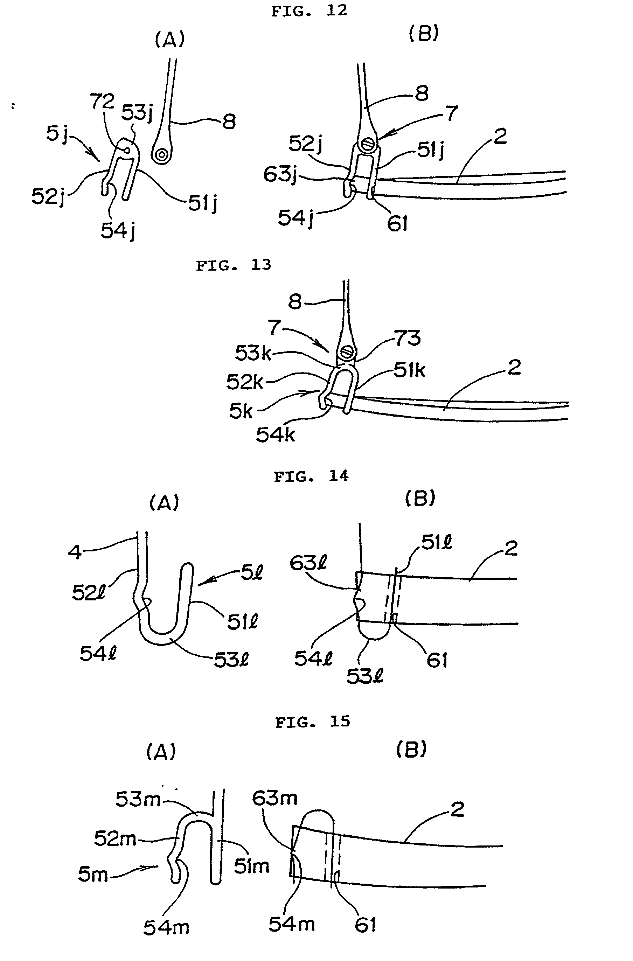

The embodiment of Fig. 12 shows an example of a first elastic clamp member 5j which is provided with a function as a hinge.

Namely, this embodiment is a type in which the first elastic clamp member 5j clamps the lens 2 from the rear side thereof and front end portions of first and second clamp pieces 51j and 52j are opened and rear end portions thereof are connected through a connecting portion 53j to which is formed a pin hole 72 into which a hinge pin 71 is directly inserted. A recess 54j is formed to a portion of the second clamp piece contacting the outer edge 21 of the lens 2 to thereby increase the fastening force of the lens. A sharp protrusion 63j is formed to the edge portion of the lens 2.

The embodiment of Fig. 13 is an alternation of the hinge portion of the embodiment of Fig. 12, in which a projecting piece 73 is formed to a connecting portion 53k of first and second clamp pieces 51k and 52k.

In the embodiment of Fig. 14, a U-shaped first elastic clamp member 5ℓ clamps the lens 2 from the forward side thereof. A recess 51ℓ is formed to a portion contacting the outer edge 21 of the lens 2 to thereby increase the fixing force of the lens 2. A sharp protrusion 63ℓ is formed to the edge portion of the lens 2.

The embodiment of Fig. 15 has a structure in which a temple is positioned on an imaginary extension line of the hole 61 of the lens 2 and a U-shaped first elastic member 5m is inserted into the hole 61 of the lens 2 from the rear side of the lens 2 to thereby firmly fix the lens 2.

A recess 54m is formed to a portion of a second clamp piece 52m of this first elastic clamp member 5m contacting the edge portion of the lens 2 and a sharp protrusion 63m is formed to the edge portion of the lens 2 to thereby achieve firm engagement of the lens 2.

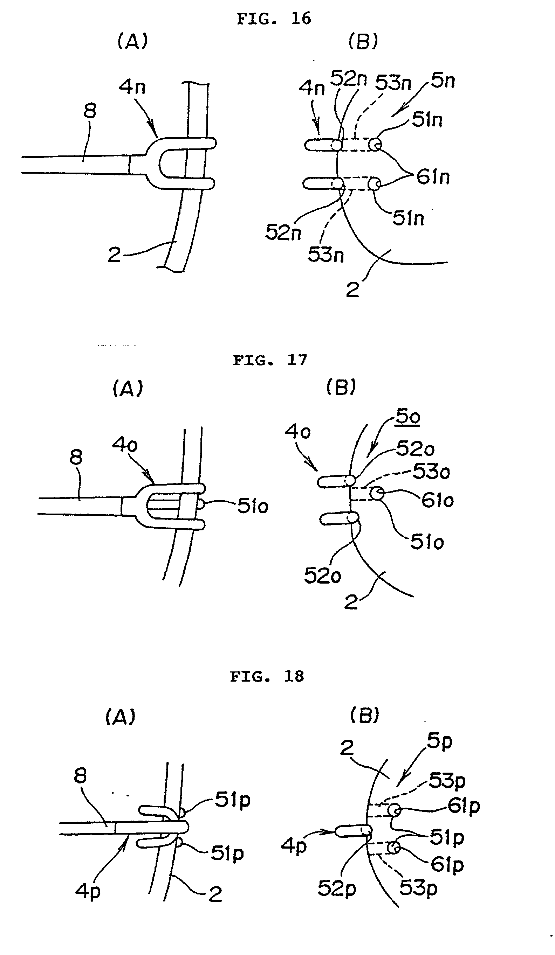

Figs. 16 to 18 represent further embodiments of the first elastic clamp member.

Fig. 16 shows a type in which first elastic clamp members 5n are formed to forked end portions of a forked end member 4n and two holes 61n and 61n are formed to the lens 2 into which first clamp pieces 51n and 51n of the forked end portions of the end member 4n are fitted. According to this embodiment, since the lens 2 is clamped between two holes 61 and the forked end member 4n at two portions, a strong clamping force is applied, thus stably fixing the lens 2.

Fig. 17 shows a type in which an end member 4o is formed with a forked shape and one hole 610 is formed to the lens 2, and a first elastic clamp member 5o has two second clamp pieces 52o connected to the forked end member 4o and one first clamp piece 51o to be inserted into the hole 610.

Fig. 18 shows a type in which one end member 4p is provided and two holes 61p and 61p are formed to the lens 2, and a first elastic clamp member 5p has one second clamp piece 52p and two first clamp pieces 51p and 51p which are to be inserted into the holes 61p and 61p.

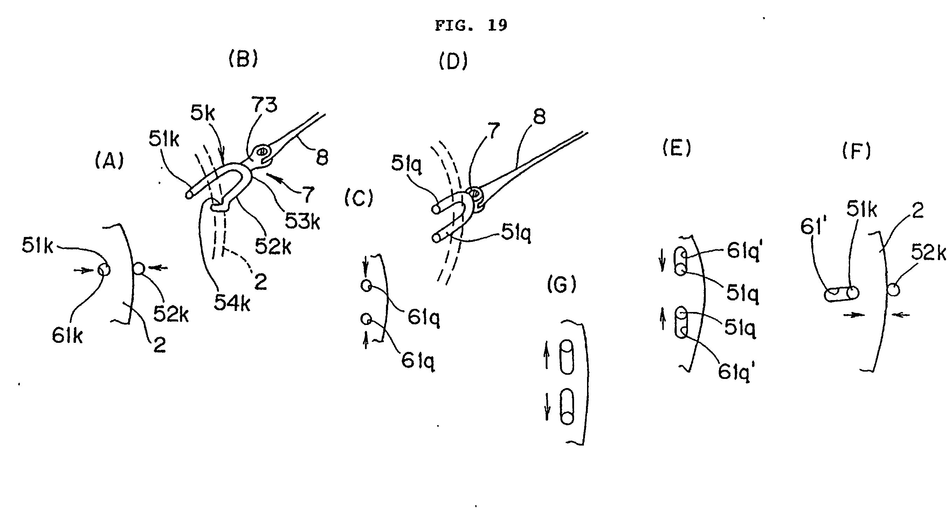

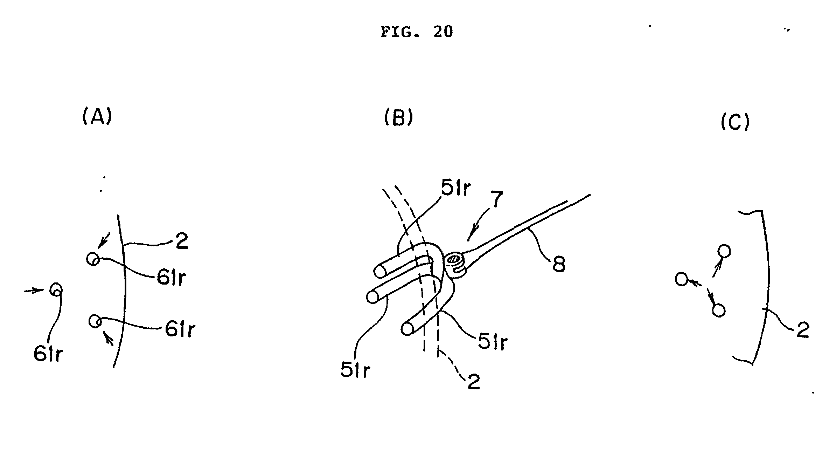

Figs. 19 and 20 are embodiments classified in accordance with the differences of types in consideration of directions of clamping forces.

Fig. 19 is an embodiment corresponding to the first elastic clamp member 5k of Fig. 13 and the clamping force directions of clamp pieces are shown by arrows in Fig. 19A to firmly clamp the lens edge portion from the bilateral direction of the lens 2.

Figs. 19C and 19D show types in which a lens portion between two holes 61q and 61q formed to the lens 2 is clamped by a pair of clamp pieces 51q and 51q which are inserted into the holes 61q and 61q, respectively, and the clamping force directions are shown by arrows to clamp the lens portion from vertical direction of the lens 2.

Further, as shown in Figs. 19E and 19F, the holes 61q and 61q may be formed so as to provide elongated hole shapes.

Furthermore, the clamping force direction may be applied applied to a mutually attracting direction as shown in Fig. 19G.

Fig. 20 shows an embodiment of a type in which the lens 2 is clamped by three clamp pieces 51r, 51r and 51r of a first elastic clamp member 5r. In the illustrated embodiment, the clamp pieces 51r are inserted into three holes 61r formed to the lens 2, but it is of course possible to insert one or two clamp pieces 51r into one or two holes 61r and to engage other one or two clamp pieces 51r with the edge portion of the lens 2. The clamping forces may be applied in attracting directions as shown in Fig. 20A or in opposing directions as shown in Fig. 20C.

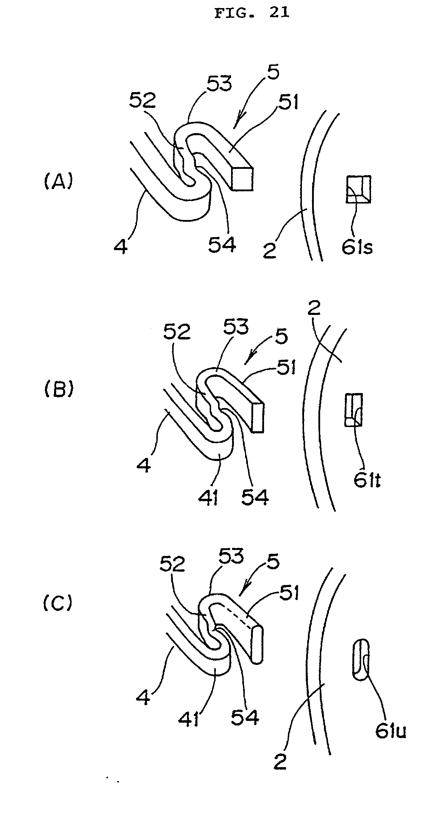

Fig. 21 shows various alternations of shapes of holes to be formed to the lens 2, in which Fig. 21A shows an example of square hole 61s, Fig. 21B shows an example of rectangular hole 61t and Fig. 21C shows an example of rounded elongated hole 61u.

The above embodiments were described with reference to spectacle parts of the end member, the bridge and the hinge, but not limited to them and these embodiments will be applicable to a structure to which the temple is directly attached or a structure attached to a nose pad of the spectacles.

### Possibility of Industrial Usage

According to the present invention, a clamp means is provided for clamping a lens, so that it is not necessary to form a large hole as in a conventional art for fitting a conventional elastic fitting portion, thus eliminating a limitation on design.

Furthermore, since it is also not necessary to precisely work the hole, the productivity of the spectacles can be improved.

## Claims

1. Spectacles having lenses (2) supported by spectacle parts other than a rim wherein the lenses (2) are directly supported by clamp means (5b) for clamping the lenses (2) wherein each of the lenses (2) is formed with a through hole (61) into which said clamp means (5b) is inserted, **characterized in that** an engaging groove (62) is formed at an outer peripheral edge of the lens (2) at a position corresponding to that of the through hole (61), said clamp means (5b) is formed with an U-shaped portion having a pair of support pieces (51b, 52b) opposing to each other, one of the support pieces (51b) on the distal end side of the clamp means (5b) is inserted into the through hole (61) of the lens (2) and the other support piece (52b) is engaged with the engaging groove (62), said engaging groove (62) being formed with a protruded portion (63b) extending in a direction substantially normal to a thickness direction of the lens (2) and said other support piece (52b) being formed with a recessed portion (54b) with which said protruded portion (63b) is engaged when the clamp means (5b) is applied to the lens (2).

2. Spectacles having lenses (2) supported by spectacle parts other than a rim wherein the lenses (2) are directly supported by clamp means (5b) for clamping the lenses (2) wherein each of the lenses (2) is formed with a through hole (61) into which said clamp means is.) is inserted, **characterized in that** an engaging groove (62) is formed at an outer peripheral edge of the lens (2) at a position corresponding to that of the through hole (61), said clamp means (5) is formed with an U-shaped portion having a pair of support pieces (51:, 52) opposing to each other, one of the support pieces (51) on the distal end side of the clamp means (5) is inserted into the through hole (61) of the lens (2) and the other support piece (52) is engaged with the engaging groove (62), wherein in order to increase the friction resistance a friction member is interposed between the clamp means and the lens.

## Patentansprüche

1. Eine Brille, die Linsen (2) besitzt, welche durch vom Rand verschiedene Brillenteile gestützt sind, wobei die Linsen (2) direkt von einer Halteeinrichtung (5b) zur Halterung der Linsen (2) gestützt werden, wobei jede der Linsen (2) mit einem Durchgangsloch (61) geformt ist, in welches die Halteeinrichtung (5b) eingefügt wird,
**dadurch gekennzeichnet, dass**
eine Eingriffsnut (62) an einer äußeren Außenkante der Linse (2) an einer dem Durchgangsloch (61) entsprechenden Stelle geformt ist, die Halteeinrichtung (5b) mit einem U-förmigen Teil gebildet ist, welcher ein Paar von Stützteilen (51b, 52b) besitzt, welche einander gegenüberliegen, wobei eines der Stützteile (51b) auf der entfernten Endseite der Halteeinrichtung (5b) in das Durchgangsloch (61) der Linse (2) eingefügt ist und das andere Stützteil (52b) mit einer Eingriffsnut (62) eingestellt ist, wobei die Eingriffsnut (62) mit einem hervorstehenden Teil (63b) geformt ist, welcher sich in eine im wesentlichen normale Richtung zu einer Dickenrichtung der Linse (2) erstreckt, und das andere Stützteil (52b) mit einem vertieften Teil (54b) gebildet wird, mit welchem der hervorstehende Teil (63b) zusammenwirkt, wenn die Halteeinrichtung (5b) an die Linse (2) angebracht ist.

2. Eine Brille, die Linsen (2) besitzt, welche durch vom Rand verschiedene Brillenteile gestützt sind, wobei die Linsen (2) direkt von einer Halteeinrichtung (5) zur Halterung der Linsen (2) gestützt werden, wobei jede der Linsen (2) mit einem Durchgangsloch (61) geformt ist, in welches die Halteeinrichtung (5) eingefügt wird,
**dadurch gekennzeichnet, dass**
eine Eingriffsnut (62) an einer äußeren Außenkante der Linse (2) an einer dem Durchgangsloch (61) entsprechenden Stelle geformt ist, die Halteeinrichtung (5) mit einem U-förmigen Teil gebildet ist, welcher ein Paar von Stützteilen (51, 52) besitzt, welche einander gegenüberliegen, wobei eines der Stützteile (51) auf der entfernten Endseite der Halteeinrichtung (5) in das Durchgangsloch (61) der Linse (2) eingefügt ist und das andere Stützteil (52) mit einer Eingriffsnut (62) eingestellt ist, wobei ein Reibeelement zwischen der Halteeinrichtung und der Linse angeordnet ist, um den Reibungswiderstand zu erhöhen.

## Revendications

1. Lunettes ayant des verres (2) supportés par des éléments de lunettes autres qu'un cercle, dans lesquelles les verres (2) sont directement supportés par des moyens de serrage (5b) pour serrer les verres (2), dans lesquelles chacun des verres (2) comporte un trou traversant (61) dans lequel sont insérés lesdits moyens de serrage (5b), **caractérisées en ce qu'**une rainure d'engagement (62) est formée au niveau d'une périphérie externe au bord du verre (2) à une position correspondant à celle du trou traversant (61), lesdits moyens de serrage (5b) sont formés d'une partie en forme de U ayant une paire de pièces de support (51b, 52b) à l'opposé l'une de l'autre, l'une des pièces de support (51b) sur l'extrémité distale des moyens de serrage (5b) est insérée dans le trou traversant (61) du verre (2) et l'autre pièce de support (52b) est en prise avec'la rainure d'engagement (62), ladite rainure d'engagement (62) étant formée d'une partie en saillie (63b) s'étendant dans une direction sensiblement perpendiculaire à une direction d'épaisseur du verre (2) et ladite autre pièce de support (52b) étant formée d'une partie en retrait (54b) avec laquelle est en prise ladite partie en saillie (63b) lorsque les moyens de serrage (5b) sont appliqués sur le verre (2).

2. Lunettes ayant des verres (2) supportés par des éléments de lunettes autres qu'un cercle, dans lesquelles les verres (2) sont directement supportés par des moyens de serrage (5b) pour serrer les verres (2), dans lesquelles chacun des verres (2) comporte un trou traversant (61) dans lequel sont insérés lesdits moyens de serrage (5 ), **caractérisées en ce qu'**une rainure d'engagement (62) est formée au niveau d'une périphérie externe au bord du verre (2) à une position correspondant à celle du trou traversant (61), lesdits moyens de serrage (5 ) sont formés d'une partie en forme de U ayant une paire de pièces de support (51 , 52 ) à l'opposé l'une de l'autre, l'une des pièces de support (51 ) sur l'extrémité distale des moyens de serrage (5 ) est insérée dans le trou traversant (61) du verre (2) et l'autre pièce de support (52 ) est en prise avec la rainure d'engagement (62), dans lesquelles, afin d'augmenter la résistance au frottement, un élément de friction est interposé entre les moyens de serrage et le verre.
